# EUROPÄISCHE PATENTSCHRIFT

(11) **EP 1 445 432 B1**
(45) Veröffentlichungstag und Bekanntmachung des Hinweises auf die Patenterteilung: **15.06.2005**
(21) Anmeldenummer: 04005289.6
(22) Anmeldetag: 24.07.2001
(51) Int. Cl.: F01L 9/04

(54) **Ventilantrieb für einen ventilgesteuerten Verbrennungsmotor**
Valve drive for a valve-controlled internal combustion engine
Commande de soupape d'un moteur à combustion interne controllé par les soupapes

(30) Priorität: 24.07.2000 DE 10035973; 11.09.2000 DE 10044789; 28.05.2001 DE 10125767
(43) Veröffentlichungstag der Anmeldung: 11.08.2004
(62) Teilanmeldung aus: 01958014.1
(73) Patentinhaber: Compact Dynamics GmbH, 82319 Starnberg (DE)
(72) Erfinder: Gründl, Andreas Dr., 81377 München (DE); Hoffmann, Bernhard, 82319 Starnberg (DE)
(74) Vertreter: Schmidt, Steffen J., Dipl.-Ing.

(56) Entgegenhaltungen:
- EP-A- 0 390 519
- EP-A- 0 406 443
- EP-A- 0 485 231

## Beschreibung

### Hintergrund der Erfindung

Die vorliegende Erfindung betrifft einen Gaswechselventilantrieb für einen ventilgesteuerten Verbrennungsmotor. Insbesondere betrifft die Erfindung ein Gaswechselventil, bei dem die Hin- und Herbewegung des Ventilgliedes nicht durch eine Nockenwelle bewirkt und gesteuert wird. Vielmehr wird bei dem erfindungsgemäßen Gaswechselventil das Ventilglied elektrisch betätigt.

### Stand der Technik

Aus der DE 195 18 056 A1 ist eine Gasventilsteuerung mit einem Gaswechselventil bekannt, das durch eine Elektromagnetanordnung betätigt wird. Dabei wird durch eine besondere Ausgestaltung des Polschenkels der Elektromagnetanordnung ein auf die Bewegung des Ankers bezogenes Signal in der Ansteuerleitung der Elektromagnetanordnung erzeugt. Dieses Signal kann ausgewertet werden, um beliebige Ankerpositionen ohne zusätzliche Sensoren zu erkennen. Ein großes Problem beim Einsatz einer Elektromagnetanordnung zur Betätigung des Ventils ist die hohe Geräuschentwicklung beim Erreichen der jeweiligen Endstellungen, das abrupte Abbremsen beim Erreichen der Endstellungen sowie die erforderlichen hohen Halteströme.

Gleiches gilt für verschiedentlich vorgeschlagene Differential-Elektromagnetanordnungen, die zum Erreichen des erforderlichen Schubes von etwa 300 - 400 N für PKW-Verbrennungsmotoren gezielt mit ansteigenden Strömen beaufschlagt werden. Damit führt das durch eine Federanordnung belastete Ventil zunächst eine Schwingbewegung aus, bevor eine an dem Ventilschaft angeordnete Eisenplatte an dem Anker der Elektromagnetanordnung anliegt, so dass ein sehr viel geringerer Haltestrom erforderlich ist. Allerdings ist hierbei die maximale Drehzahl des Verbrennungsmotors erheblich begrenzt. Die Anlaufzeit beim Start ist relativ hoch, da es wegen der notwendigen hohen Kraft einige Zeit dauert, bis sich die Ventilanordnung in ihre gewünschte Stellung geschwungen hat.

Aus der JP-A-3-92518 ist eine Antriebseinrichtung für eine Ventilanordnung in Verbrennungsmotoren bekannt, bei der der Ständer aus zwei etwa halbzylindrischen Schalen aufgebaut ist, die sowohl in Umfangsrichtung als auch in Längsrichtung jeder Schale geteilte, dem Läufer zugewandte Zähne aufweisen. Die einzelnen Zähne jeder Schale sind jeweils von einer Spule umgeben, deren Mittellängsachse in radialer Richtung verläuft. Dadurch ergibt sich ein in radialer Richtung orientierter magnetischer Fluss, der ausgehend von jedem einzelnen der Vielzahl von Zähnen, durch den Luftspalt zwischen Ständer und Läufer, in den Läufer fließt.

Eine insoweit übereinstimmende Ausgestaltung des Ständers, der Ständerspulen und des Läufers einer Antriebseinrichtung für eine Ventilanordnung in Verbrennungsmotoren ist in der US 5,129,369 beschrieben. Auch hier sind in radialer und tangentialer Richtung unterteilte Zähne des Ständers jeweils von einer Spule umgeben, deren Mittellängsachse in radialer Richtung verläuft.

Auch die EP 0 485 231 A1 zeigt eine ähnliche Art der Gestaltung des Ständers, der Ständerspulen und des Läufers einer Antriebseinrichtung für eine Ventilanordnung in Verbrennungsmotoren. Auch hier sind in radialer und tangentialer Richtung unterteilte Zähne des Ständers jeweils von einer radial orientierten Spule umgeben.

Diese Anordnungen erfordern in der Herstellung einen sehr hohen Aufwand, da die Montage der Spulen um die einzelnen Zähne herum schwierig zu realisieren ist. Außerdem ist die bei diesem Aufbau erzielbare Polteilung relativ groß.

Aus der W098/55741 ist eine Ventilanordnung für einen ventilgesteuerten Verbrennungsmotor bekannt, mit einem elektrischen Wanderfeldmotor als Aktuator für ein Ventilglied, der einen mit einem Ventilglied gekoppelten Läufer und einen Ständer aufweist. Der Ständer ist aus Blechen aufgebaut, deren Fläche senkrecht zur Bewegungsrichtung des Läufers orientiert ist. Der Ständer hat dem als Synchronoder Asynchronläufer ausgebildeten Läufer zugewandte Zähne, die jeweils eine geschlossene, dem Läufer zugewandte Zylindermantelfläche haben. Jeweils zwischen zwei benachbarten Zähnen des Ständers sind Ständerspulenkammern gebildet, in denen jeweils eine parallel zu der Fläche der Bleche orientierte Spule angeordnet ist.

Aus der US 6,039,014 ist eine von einem Linearmotor angetriebene Ventilanordnung für einen Verbrennungsmotor bekannt. Hierbei weist ein Ständer des Linearmotors mehrere Spulen auf, die jeweils durch einen ferromagnetischen Gehäuseabschnitt voneinander getrennt sind. Ein Läufer ist aus mehreren, aus einem dauermagnetischen Material bestehenden Abschnitten aufgebaut, zwischen denen jeweils aus einem ferromagnetischen Material bestehenden Abschnitten angeordnet sind.

Weitere Dokumente, die technischen Hintergrund für die Erfindung zeigen, sind ohne Anspruch auf Vollständigkeit: DE 33 07 070 A1, DE 35 00 530 A1, EP 244 878 B1,WO 90/07635, US 4,829,947, EP 377 244 B1, EP 347 211 B1, EP 390 519 B1, EP 328 194 B1, EP 377 251 B1, EP 312 216 B1, US 4,967,702, US 3,853,102, US 4,829,947, US 4,915,015, WO 90/07637, EP 244 878 B1, EP 328 195 A2.

### Der Erfindung zugrundeliegendes Problem

Alle Konzepte, die in den vorstehend genannten Dokumenten beschrieben sind, haben gemeinsam, dass mit ihnen der für Gaswechselventile in Verbrennungsmotoren erforderliche Hub, Schub und Dynamik bei ausreichend kompaktem Aufbau und hoher Zuverlässigkeit für den Groß-Serien-Einsatz in KFZ-Motoren nicht erreicht werden. Außerdem sind bekannte Anordnungen in der Herstellung sehr platz- und kostenintensiv. Schließlich sind diese Anordnungen auch nicht für den Einsatz in schnell laufenden (hochtourigen) Verbrennungsmotoren geeignet, da keine dieser Anordnungen hinsichtlich der bewegten Massen optimiert ist.

### Erfindungsgemäße Lösung

Zur Behebung dieser Nachteile lehrt die Erfindung einen Gaswechselventilantrieb für einen ventilgesteuerten Verbrennungsmotor, mit einem elektrischen Linearmotor als Aktuator für ein Ventilglied, der durch die Merkmale des Anspruchs 1 definiert ist.

### Aufbau und Vorteile der erfindungsgemäßen Lösung

Erfindungsgemäß hat der Gaswechselventilantrieb für einen ventilgesteuerten Verbrennungsmotor einem mit einem Ventilglied zu koppelnden hohlzylindrischen Läufer und einen Ständer, wobei der Läufer konzentrisch übereinander angeordnete, dauermagnetische Ringe aufweist, der Ständer zumindest teilweise aus einem weichmagnetischen Material aufgebaut ist und zumindest einen dem Läufer zugewandten Zahn aufweist, der Ständer einen radial innen liegenden magnetisch leitenden Bereich und einen radial außen liegenden magnetisch leitenden Bereich aufweist, wobei die Ringe des Läufers zwischen dem innen liegenden Bereich und dem außen liegenden Bereich des Ständers angeordnet sind, und der außen liegende Bereich des Ständers zumindest in einem Teilabschnitt in radialer Richtung eine C-förmige Querschnittsgestalt hat und zumindest eine Ständerspule aufweist.

Das der Erfindung zugrunde liegende Konzept besteht darin, den die Ankerdurchflutung bewirkenden Teil des Ständers, nämlich dem Spulenbereich mit der Ständerspule räumlich aus dem die Kraft des Linearmotors bildenden Teil, nämlich dem Zahnbereich des Ständers "herauszulösen". Damit kann im Vergleich zu herkömmlichen Linearmotoren, bei denen die Ständerspulen jeweils zwischen zwei Zähnen des Ständers angeordnet sind, eine erheblich höhere Ankerdurchflutung erreicht werden. Dies liegt daran, dass die Spule durch die erfindungsgemäße Gestaltung erheblich weniger räumliche Einschränkungen hat und so auf minimale (ohmsche) Verluste - und damit einhergehende maximale Magnetfeldinduktion - optimiert werden kann. Durch die Abmessungen der dauermagnetischen Ringe in der Bewegungsrichtung des Läufers bzw. die Abmessungen eines Zahns des Ständers in der Bewegungsrichtung des Läufers ist eine Polteilung definiert, die kleiner ist als die Abmessung der Ständerspule in deren Längsrichtung.

Gleichermaßen werden die Kraft bzw. Bewegung hervorrufenden Läufermagnetpol/Ständerzahn-Anordnungen konzentriert, so dass diese nicht durch Ständerspulen unterbrochen sind. Dies erlaubt eine sehr kleine Polteilung, welche wiederum eine hohe Kraftdichte bewirkt. Außerdem sind mit der erfindungsgemäßen Anordnung Teilhübe des Ventilgliedes möglich. Damit kann bei einem mit den erfindungsgemäßen Gaswechselventilantrieben ausgestatteten Verbrennungsmotor auf eine Drosselklappe bei der Zumessung des Luft-Kraftstoff-Gemisches und deren zugehörige Ansteuerung verzichtet werden.

Durch die erfindungsgemäße Ausgestaltung wird in den C-förmigen Jochen des außen liegenden Bereiches des Ständers durch die dort angeordnete(n) Ständerspule(n) magnetischer Fluss in den Ständer induziert und fließt von den radialen Abschnitten der C-förmigen Joche über den ringförmigen Luftspalt, in dem die hohlzylindrischen Dauermagnete angeordnet sind, in den innen liegenden (zylindrisch geformten) Bereich des Ständers. Von dem innen liegenden Bereich des Ständers dort schließt sich der magnetische Kreis wieder in Richtung der C-förmigen Joche des außen liegenden Bereiches des Ständers.

Ein weiterer wesentlicher Vorteil des erfindungsgemäßen Gaswechselventilantriebs besteht darin, dass praktisch nur die magnetisch wirksamen Komponenten (die Dauermagnete) zur trägen Masse des Läufers beitragen, während alle anderen Teile des Motors (Spulen, magnetischer Rückschluss, etc.) dem Ständer zugeordnet sind. Damit kann ein besonders hohes Verhältnis von durch den Motor ausgeübter Kraft zu träger Masse erzielt werden. Außerdem ist der erfindungsgemäße Gaswechselventilantrieb hervorragend geeignet, in schnell laufenden Verbrennungsmotoren eingesetzt zu werden. Dabei kann insbesondere das Annähern des Ventilgliedes an die Endpositionen (Offen- oder Geschlossen-Stellung des Gaswechselventils) bei hoher Geschwindigkeit mit hohen Beschleunigungsänderungen erfolgen, so dass das Ventilglied im Ventilsitz mit minimaler Geschwindigkeit auftrifft, während das Ventilglied im übrigen mit sehr hohen Geschwindigkeiten bewegt wird. Außerdem steht in den Endbereichen des Bewegungsverlaufs die maximale Kraft zur Verfügung. Dies erlaubt einen sehr geräusch- und verschleißarmen, und wegen der erzielbaren hohen Haltekräfte in den Endstellungen gleichzeitig sehr sicheren Betrieb der erfindungsgemäßen Gaswechselventile.

Da bei dem erfindungsgemäßen Gaswechselventilantrieb mehrere hintereinander geschaltete, einzeln ansteuerbare einphasige Motoren vorgesehen sein können, kann die insgesamt erzeugte Kraft entlang des Hubweges des Ventilgliedes genau auf die jeweils erforderliche Kraft eingestellt werden. Hierbei ist zu beachten, dass der erfindungsgemäße Gaswechselventilantrieb in der Regel einphasig zu betreiben ist. Es ist jedoch auch möglich, die Ständerspulen der einzelnen über einander angeordneten Motoren mehrphasig zu betreiben. Durch die erfindungsgemäße Anordnung ist es nicht erforderlich, das Ventilglied mit erheblicher kinetischer Energie zu beaufschlagen, damit dieses seine Endstellung einnimmt.

Durch die sehr einfach gestaltbare (einphasige und zylindrische) Anordnung der Ständerspule(n) ist es möglich, die auf die Spule wirkenden Rüttelkräfte gering zu halten, so dass Vibrationen der Spule oder Reibung der Spule an der Wandung der Ständerspulenkammer gering sind. Damit ist es möglich, mit minimalem Isolationsmaterial bzw. Auskleidungsmaterial der Ständerspulenkammer auszukommen. Auch dies trägt zur Kompaktheit und Zuverlässigkeit der Gesamtanordnung bei. Außerdem bewirkt dies eine hohe Leistungsdichte auch bei kleinen Gaswechselventilen, da der Füllfaktor der Ständerspulenkammer (Spulenvolumen in der Ständerspulenkammer bezogen auf das Gesamtvolumen der Ständerspulenkammer) hoch ist.

Gegenüber den (zum Beispiel aus der US 6,039,014) bekannten Anordnungen minimiert die erfindungsgemäße Anordnung die Streuflüsse und erlaubt eine sehr effiziente Montage mehrerer nebeneinander angeordneter Gaswechselventile, wobei benachbarte Gaswechselventilantriebe den magnetischen Rückschluss zumindest zum Teil wechselweise nutzen können. Dadurch kann die Masse und das Volumen des magnetischen Rückschlusskörpers minimiert werden.

### Weiterbildungen der erfindungsgemäßen Lösung

Vorzugsweise ist der Spulenbereich in Bewegungsrichtung des Läufers größer als der Abstand zwischen zwei benachbart angeordneten Zähnen des Ständers.

Der Ständer kann in bekannter Weise aus Elektroblechteilen aufgebaut sein. Es ist aus Vereinfachung der Herstellung jedoch auch möglich, ihn zumindest teilweise als einen weichmagnetischen Formkörper, vorzugsweise aus gepresstem und/oder gesintertem Metallpulver zu gestalten. Vorzugsweise weist der Ständer einen Bandwickel aus weichmagnetischem Blechband auf, wobei an den Stirnseiten des Bandwickels jeweils ein weichmagnetischer Formkörper, vorzugsweise aus gepresstem und/oder gesintertem Metallpulver zur Bildung der Zähne angeordnet ist. Um die Sättigungsinduktion des Ständers zu erhöhen ist es auch vorteilhaft, wenn der weichmagnetische Formkörper des Ständers in seinem Inneren wenigstens einen Kern mit Kobalt-haltigem Eisen aufweist, der vorzugsweise als Blechwickel ausgestaltet ist.

In einer bevorzugten Ausführungsform ist dem Läufer ein Wegsensor zur Erfassung des Hubes des Ventilgliedes zugeordnet. Dies kann zum Beispiel ein Interferometer oder ein induktiver Sensor mit Trägerfrequenz sein. Dies ist insbesondere deshalb vorteilhaft, weil mit dem erfindungsgemäßen Aktuator auch Teilhübe, (d.h. Zwischenstellungen zwischen Offen und Geschlossen) der Ventilanordnung möglich sind. Dieser Teilhub kann über den Sensor erfasst bzw. kontrolliert werden.

Der Läufer ist zumindest teilweise durch einen magnetischen Rückschlusskörper des Ständers umgeben. Dabei kann die Spule des Ständers entweder an dem Ständer oder in dem Rückschlusskörper angeordnet sein.

Die magnetisch abwechselnd orientierten Dauermagnet-Ringe können zusätzlich durch magnetisch nicht wirksame Abstandshalter aus Leichtmaterial (Aluminium, Titan, Kunststoff - auch mit Glas- oder Kohlenstofffasereinlagen, oder dergl.) in einem vorbestimmten Abstand zueinander gehalten sein. Damit kann die träge Masse des Läufers gering gehalten werden.

Erfindungsgemäß ist der Ständer aus einem weichmagnetischen Material aufgebaut und hat dem Läufer zugewandte Zähne. Zwischen zwei benachbarten Zähnen des Ständers kann eine Wicklungskammer gebildet sein, in der eine Wicklung angeordnet ist. Der Läufer weist Ringe aus dauermagnetischem Material auf. Diese Magnetringe sind konzentrisch derart übereinander angeordnet sind und deren magnetische Orientierung ist so gestaltet, dass in einer vorbestimmten Stellung des Läufers zwei Zähne des Ständers jeweils mit einem Magnetring mit entgegengesetzter magnetischer Orientierung fluchten.

Zur Bildung eines Außenläufermotors ist der Ständer zumindest teilweise von dem Läufer - voneinander durch einen Luftspalt getrennt - umgeben. In analoger Wiese ist zur Bildung eines Innenläufermotors der Läufer zumindest teilweise von dem Ständer umgeben. Dabei ist es erfindungsgemäß auch möglich, den Ständer durch übereinander angeordnete Dauermagnetscheiben zu bilden, während der Läufer eine Wicklungskammer aufweist, die durch entsprechende weichmagnetische Ringscheiben begrenzt ist.

Die mit den erfindungsgemäßen Ausführungsformen realisierbare hohe Kraftdichte ist unter anderem auch dadurch erreichbar, dass die Zähne bzw. die ihnen gegenüber befindlichen Dauermagnete im Verhältnis zur der axialen Erstreckung der Wicklungskammer so kurz bemessen sind, dass zumindest zwei weitere Dauermagnete (mit jeweils unterschiedlicher magnetischer Orientierung) Platz finden

. Erfindungsgemäß ist in einer bevorzugten Ausführungsform der Läufer zumindest teilweise durch einen magnetischen Rückschlusskörper umgeben. Insbesondere beim Einsatz mehrerer nebeneinander angeordneter Gaswechselventile ist es vorteilhaft, einerseits bei jedem Gaswechselventil wenigstens zwei Wicklungskammern mit Zähnen, Wicklungen im Ständer und entsprechenden Dauermagneten im Läufer vorzusehen, wobei die Wicklungen in den benachbarten Gaswechselventilen derart gegensinnig angesteuert werden, dass die magnetischen Flüsse durch den magnetischen Rückschlusskörper möglichst wenig Streufluss-Anteile aufweisen. Damit kann das Volumen - und das Gewicht - des magnetischen Rückschlusskörpers gering gehalten werden. Außerdem minimieren sich dabei die Verlustleistungen. Ein wesentlicher Gesichtspunkt ist dabei, dass der magnetische Rückschlusskörper die Gestalt eines im Querschnitt etwa rechteckigen Profilrohres aufweist, bei dem zwei einander gegenüberliegende Wände Durchbrüche aufweisen, durch die der Innenteil des Ständers (Spulenanordnungen) und der Läufer hindurchragen. Diese Anordnung minimiert die Streuflüsse und erlaubt insbesondere auch eine sehr effiziente Montage mehrerer nebeneinander angeordneter derartigen Gaswechselventile, wobei - entsprechende elektrische Ansteuerung vorausgesetzt - benachbarte Gaswechselventil-Antriebe den magnetischen Rückschluss zumindest zum Teil wechselweise nutzen können. Damit kann die Masse (und das Volumen) des magnetischen Rückschlusskörpers minimiert werden.

Schließlich betrifft die Erfindung einen internen Verbrennungsmotor mit wenigstens einem Verbrennungszylinder, mit wenigstens einer Ventilanordnung für Einoder Auslassventile mit einem oder mehreren der vorstehenden Merkmale.

### Eigenschaften des erfindungsgemäßen Gaswechselventilantriebs

Aus der erfindungsgemäßen Ausgestaltung des Gaswechselventilantriebs ergeben sich folgende Eigenschaften:
- hohe Antriebsdynamik bei niedriger Leistungsaufnahme.
- Eine Federanordnung zum Ausgleich von durch bewegte Massen hervorgerufenen Kräften ist nicht erforderlich um bei einer Masse des Ventilgliedes von etwa 30
- 70 Gramm, einem Ventilhub von etwa 5 - 10 mm und einer Drehzahl eines Vierzylinder-Verbrennungsmotors von mindestens etwa 6000 U/min einen End-Positionswechsel (von Offen nach Geschlossen oder umgekehrt) des Ventilgliedes von weniger als 1.5 Millisekunden bei einer mittleren Leistungsaufnahme über zwei vollständige Kurbelwellenumdrehungen von weniger als etwa 100 Watt zu realisieren.
- In den jeweiligen End-Positionen des Ventilgliedes sind nur geringe Halteströme erforderlich um das Ventilglied sicher in der jeweiligen Stellung zu halten.
- Da auf eine Federanordnung verzichtet wird (siehe oben) entfallen sonst notwendige Einschwingvorgänge des Ventilgliedes. Dies verringert die Dauer des Stellvorgangs.
- Durch den erfindungsgemäßen Aktuator kann das Ventilglied praktisch aus jeder momentanen Lage präzise in jede beliebige Stellung gebracht werden. Dies gilt insbesondere für die End-Positionen, die sehr genau von dem Ventilglied angefahren werden können. Damit kann - mit einer entsprechenden elektronischen Ansteuerung der Spule(n) ein Auftreffen des Ventilgliedes in seinem Ventilsitz mit weniger als 40mm/sec sichergestellt werden. Dies hält den Verschleiß und die Geräuschentwicklung der Ventilanordnung im Betrieb sehr gering.
- Das Ventilglied kann - obwohl mit dem Läufer starr verbunden - gegenüber seinem Ventilsitz um seine Bewegungsachse rotierbar aufgenommen sein, so dass ein punktueller Verschleiß des Ventilgliedes oder des Ventilsitzes verhindert wird.
- Durch die hohe Leistungsdichte der erfindungsgemäßen Anordnung können die Querabmessungen (Durchmesser) des Gaswechselventils mit den notwendigen Leistungsdaten sehr klein gehalten werden. Dies erlaubt den Einsatz in kompakten Pkw-Motoren.

Weitere Merkmale, Eigenschaften, Vorteile und mögliche Abwandlungen werden anhand der nachstehenden Beschreibung erläutert, in der auf die beigefügten Zeichnungen Bezug genommen ist.

### Kurzbeschreibung der Zeichnungen

In Fig. 1 ist eine erste Ausführungsform eines erfindungsgemäßen Gaswechselventilantriebs schematisch im Längsschnitt veranschaulicht.
In Fig. 2a ist eine zweite Ausführungsform eines erfindungsgemäßen Gaswechselventilantriebs schematisch im Längsschnitt veranschaulicht.
In Fig. 2b ist eine Schnittansicht entlang der Linie II-II in der Ausführungsform nach Fig. 2a veranschaulicht.
In Fig. 3 ist eine dritte Ausführungsform eines erfindungsgemäßen Gaswechselventilantriebs schematisch im Längsschnitt veranschaulicht.
In Fig. 4 ist eine vierte Ausführungsform eines erfindungsgemäßen Gaswechselventilantriebs schematisch im Längsschnitt veranschaulicht.
In Fig. 5 ist eine fünfte Ausführungsform eines erfindungsgemäßen Gaswechselventilantriebs teilweise schematisch im Längsschnitt veranschaulicht.
In Fig. 6 ist eine sechste Ausführungsform eines erfindungsgemäßen Gaswechselventilantriebs teilweise schematisch im Längsschnitt veranschaulicht.

### Beschreibung bevorzugter Ausführungsformen der Erfindung

In den Fig. übereinstimmende Bezugszugszeichen kennzeichnen gleiche oder gleich wirkende Teile und sind nachstehend nicht mehrfach erläutert.

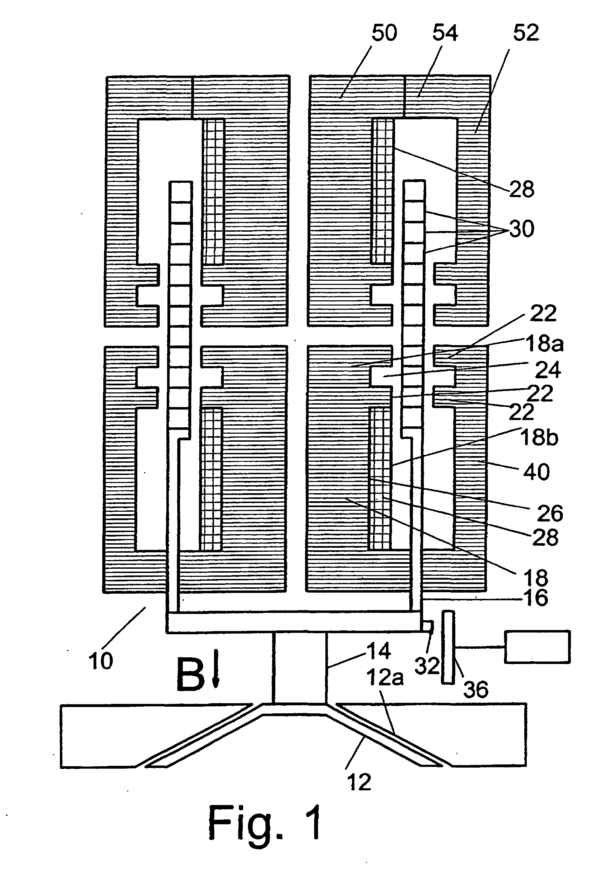

In Fig. 1 ist eine erste Ausführungsform eines elektrischen Linearmotors 10 veranschaulicht, der bei der erfindungsgemäßen Ventilanordnung als Aktuator für ein Ventilglied 12 eines Gaswechselventils dient, dessen zugehöriger Ventilsitz 12a nur schematisch veranschaulicht ist. Der Unearmotor 10 hat einen mit dem Ventilglied 12 über eine Stange 14 gekoppelten Läufer 16 und einen Ständer 18.

Der Ständer 18 ist bei dieser Ausführungsform als weichmagnetischer Formkörper mit im Wesentlichen hohlzylindrischer Gestalt und einem darin befindlichen zylindrischen Kern aus gesintertem Eisen-Metallpulver gebildet. Dabei ist der Formkörper funktionell in einen Zahnbereich 18a und einen dem Zahnbereich 18a benachbarten aber von ihm getrennten Spulenbereich 18b unterteilt.

Der Zahnbereich 18a des Ständers 18 hat an seinem Umfang zwei dem Läufer 16 zugewandte Zähne 22 mit einer geschlossenen Mantelfläche. Im vorliegenden Beispiel mit in der Draufsicht kreisrunden Formkörpern haben die einzelnen Zähne 22 eine kreiszylindrische Mantelfläche. Es ist jedoch auch möglich, ovale Formkörper oder Formkörper mit polygonaler Gestalt zum Aufbau des Ständers 18 zu verwenden.

Die beiden Zähne 22 des Ständers 18 begrenzen zwischen sich eine parallel zu den Zähnen 22 verlaufende Ringnut 24, deren Abmessung bei der vorliegenden Ausführungsform in der Bewegungsrichtung B des Läufers 16 der Abmessung der beiden Zähne 22 entspricht.

An den Zahnbereich 18a angrenzend weist der Ständer 18 den Spulenbereich 18b auf, der eine zur Außenseite hin offene Ständerspulenkammer 26 hat, in der eine zur Mittellängsachse des Ständers 18 konzentrische Ständer-Spule 28 angeordnet ist. Die Ständer-Spule 28 ist zum Erzielen eines möglichst hohen Füllfaktors als Kupferbandspule ausgeführt. Die Art der Verschaltung der einzelnen Spulen 28 bzw. deren zeitlich gesteuertes Beaufschlagen mit elektrischem Strom ist von der gewünschten Art des Motors (Ein- oder Mehrphasenmotor) abhängig, wobei eine einphasige Betriebsweise einfacher und daher zu bevorzugen ist.

Da jede Spule 28 über ihre gesamte Erstreckung in der Ständerspulenkammer 26 angeordnet ist, trägt sie auch über ihre gesamte Länge zur effektiven Kraftbildung in dem Linearmotor bei.

In der gezeigten Anordnung ist der Läufer 16 ein Hohlzylinder, der Magnetringe 30 aus dauermagnetischem Material (zum Beispiel Samarium-Cobalt) aufweist. Die einzelnen Magnetringe 30 sind konzentrisch übereinander angeordnet, wobei die magnetische Orientierung der Magnetringe abwechselnd radial orientiert ist und die Ringe in ihren Abmessungen so gestaltet ist, dass in einer vorbestimmten Stellung des Läufers 16 zwei Zähne 22 eines Ständers 18 jeweils mit einem Magnetring 30 mit gleicher magnetischer Orientierung fluchten.

Zwischen zwei aufeinander folgenden Magnetringen 30 können zur Verringerung der trägen Masse des Läufers 16 auch magnetisch nicht wirksame hohlzylindrische Distanzhalter aus Kunststoff, zum Beispiel aus kohlefaserverstärktem Kunststoff eingefügt sein. Die aneinander anliegenden Dauermagnet-Ringe und die magnetisch nicht wirksamen Hohlzylinder sind fest mit einander verbunden. Mit anderen Worten befinden sich im beweglichen Teil des Motors (dem Läufer) keine Magnetfluss leitenden Teile (zum Beispiel Fluss-Leitstücke), sondern nur Dauermagnete, die stets optimal im magnetischen Feld angeordnet sind. Diese Anordnung hat auch den Vorteil einer Gewichtseinsparung. Sofern radial orientierte Ringscheiben aus dauermagnetischem Material nicht die ausreichende magnetische Feldstärke erzeugen können, ist es erfindungsgemäß auch möglich, Ringscheibensegmente aus Dauermagneten so zusammenzusetzen, dass ein radial (von innen nach außen oder umgekehrt) gerichtetes Magnetfeld quer zur Bewegungsrichtung des Läufers 16 entsteht.

Der Abstand zwischen den Zähnen 22 kann gegenüber der Abmessung der Zähne 22 in der Bewegungsrichtung B des Läufers 16 variieren. Dies erfordert jedoch auch entsprechende Ausgestaltung der Magnetringe 30 des Läufers 16, da die Periodizität der Magnetringe 30 des Läufers 16 gleich der Periodizität der Zähne 22 bzw. deren zwischenliegenden Ringnuten 24 am Ständer 18 sein muss.

An dem Läufer 16 ist ein Weg-Geber 32 angeordnet, der mit einer entsprechenden Sonde 34 abgetastet wird.

Als magnetischer Rückschluss ist als Teil des Ständers ein hohlzylindrisches Rohr 40 vorgesehen, das an seinem einen Endbereich (in Fig. 1 oben) zwei radial nach innen reichende Zähne 42 aufweist, die in zusammengebautem Zustand des Ständers 18 mit den Zähnen 22 des Ständers 18 fluchten. An seinem anderen Endbereich schließt das hohlzylindrische Rohr 40 mit der äußeren Einfassung des Spulenbereiches 18b ab.

In der Fig. 1 sind zwei übereinander angeordnete Ständer 18 gezeigt, die von einem gemeinsamen Läufer 16 durchdrungen sind. Damit ist es möglich, bei entsprechender Ansteuerungen der beiden Spulen 28 der beiden Ständer 18 einen zweiphasigen Linearantrieb zu realisieren.

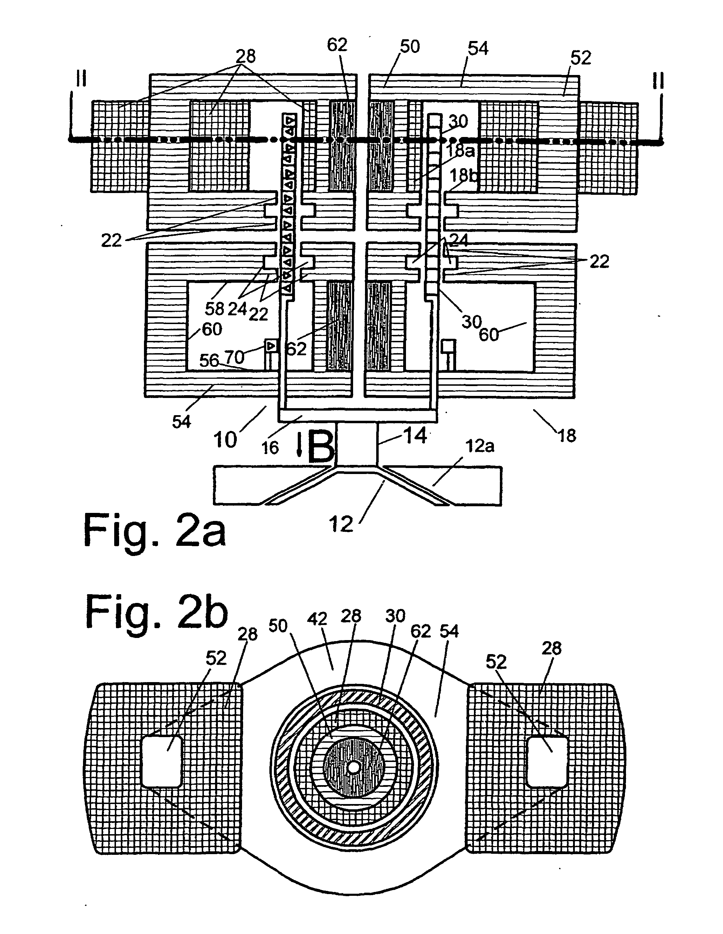

Anstatt oder zusätzlich zu der Anordnung der Spule 28 an dem Außenumfang des Spulenbereichs 18b, ist es auch möglich, die Spulen 28 an dem radial außen liegenden Abschnitt des magnetischen Rückschlusses 40 anzuordnen. Dies ist im Zusammenhang mit der in Fig. 2 veranschaulichten Ausführungsform nachstehend erlä utert.

Fig. 2 zeigt einen Gaswechselventilantrieb mit einem Ständer 18 und einem hohlzylindrischen Läufer 16, der aus konzentrisch übereinander angeordneten dauermagnetischen Ringen 30 mit abwechselnden Magnetorientierungen aufgebaut ist.

Der Ständer 18 ist im Wesentlichen aus einem weichmagnetischen Material aufgebaut mit einem radial innen liegenden magnetisch leitenden Bereich 50 und einem radial außen liegenden magnetisch leitenden Bereich 52. Die Magnetringe 30 des Läufers sind 16 in dem Luftspalt zwischen dem innen liegenden Bereich 50 und dem außen liegenden Bereich 52 des Ständers 18 angeordnet.

Der innen liegende Bereich 50 und der außen liegende Bereich 52 haben jeweils zwei miteinander fluchtende dem Läufer 16 zugewandte Zähne 22, die durch eine Ringnut 24 voneinander getrennt sind und auch jeweils mit einem der Magnetringe 30 des Läufers 16 fluchten. Die erfindungsgemäße Anordnung ist auch mit jeweils nur einem Zahn 22 an dem innen liegenden Bereich 50 und dem außen liegenden Bereich 52 funktionsfähig, die jeweils mit einem der Magnetringe 30 des Läufers fluchten. Weiterhin funktioniert die erfindungsgemäße Anordnung auch, wenn nur an dem an dem innen liegenden Bereich 50 oder dem außen liegenden Bereich 52 ein Zahn 22 ausgeformt ist, der mit einem der Magnetringe 30 des Läufers fluchtet.

Auch bei dieser in Fig. 2 veranschaulichten Ausführungsform können jeweils zwei benachbarte Ringe 30 des Läufers 16 durch magnetisch nicht wirksame Abstandshalter in einem vorbestimmten Abstand zueinander gehalten sein.

In gleicher Weise wie bei der Ausführungsform nach Fig. 1 ist hier die Spule des Ständers 18 größer als der Abstand bzw. der Raum zwischen zwei benachbart angeordneten Zähnen 22 des Ständers 18.

Ein wesentlicher Unterschied zwischen der Ausführungsform nach Fig. 1 und der Ausführungsform nach Fig. 2 besteht darin, dass bei Fig. 2 die Ständerspule nicht nur wie bei Fig. 1 den radial innen liegenden Bereich des Ständers koaxial umgibt. Hierzu ist der radial außen liegende Bereich 52 des Ständers 18 in zwei einander radial gegenüberliegenden Teilabschnitten 54 im Querschnitt C-förmig gestaltet. Jeder der C-förmigen Teilabschnitte 54 hat zwei in Bewegungsrichtung B des Läufers 16 voneinander beabstandete radial orientierte Schenkel 56, 58. Die jeweiligen radial orientierten Schenkel 56, 58 sind durch ein im Wesentlichen in Bewegungsrichtung B des Läufers 16 orientiertes Verbindungsjoch 60 miteinander verbunden. Jedes der Verbindungsjoche 60 trägt eine Ständerspule 28. Nicht veranschaulicht, aber erfindungsgemäß ebenfalls möglich ist es, zusätzlich oder anstelle der parallel zur Bewegungsrichtung des Läufers 16 orientierten, gezeigten Ständerspulen 28 radial orientierte Ständerspulen an den radialen Schenkeln 56, 58 vorzusehen.

Der besseren Übersicht wegen sind die Ständerspulen 28 nur in der oberen Motoreinheit in Fig. 2a eingezeichnet, während sie bei der unteren Motoreinheit in Fig. 2a weggelassen sind.

Der Ständer 18 mit seinen radial inneren und seinen radial äußeren Bereichen ist ein weichmagnetischer Formkörper aus gepresstem und gesintertem Metallpulver. Im radial innen liegenden Bereich des Ständers 18 ist in Richtung des magnetischen Flusses und längs der Bewegungsrichtung des Läufers 16 ein gewickelter Blech-Kern 62 mit kobalthaltigem Eisen in das Metallpulver des Formkörpers vor den Pressen und Sintern eingebracht. Dabei kann der gewickelte Blech-Kern 62 mit kobalthaltigem Eisen den Ständer 18 in seinem innen liegenden Teil praktisch vollständig ausfüllen, so dass zwischen dem gewickelten Blech-Kern 62 und der Ständerwicklung 28 kein weichmagnetisches gepresstes und gesintertes Metallpulver vorgesehen ist. In gleicher Weise können, falls dies erforderlich ist, in dem radial außen liegenden Teil des Ständers 18 in Richtung des magnetischen Flusses gewickelte Blech-Kerne mit kobalthaltigem Eisen eingebracht sein.

Sofern die geometrischen Verhältnisse es zulassen, ist es auch möglich, wie in Fig. 2a in der oberen Motoreinheit gezeigt, den radial innen liegenden Bereich 40 des Ständers 18 ebenfalls mit einer Ständerspule 28 zylindrisch zu umgeben. In diesem Fall addieren sich die von den Ständerspulen induzierten magnetischen Flüsse bei gleichphasiger Ansteuerung.

Wie in Fig. 2b gezeigt, sind von dem radial außen liegenden Teil des Ständers 18 entlang des Umfangs des Ständers 18 verteilt zwei Teilabschnitte 54 mit jeweils einer Ständerspule 28 angeordnet. Es ist jedoch auch möglich, mehr als zwei der im Querschnitt C-förmig gestalteten Teilabschnitte 54 mit entsprechenden Ständerspulen entlang des Umfangs des Ständers 18 zu verteilen.

Weiterhin ist in Fig. 2 eine Brems- und Halte-Einrichtung für den Läufer 16 in seiner unteren Endstellung (also der Offen-Stellung) veranschaulicht. Hierzu ist ein die Ringe 30 des Läufers 16 umgebender oder von diesen umgebener Magnetring 70 mit radialer Magnetorientierung im Bereich einer jeweiligen Anschlages des Läufers 16 ortsfest angeordnet. Dabei ist der Magnetring 70 bezogen auf die Bewegungsrichtung des Läufers 16 und insbesondere bezogen auf die Endstellung des unteren Rings 30 des Läufers 16 so angeordnet ist, dass der unterste Ring 30 des Läufers 16 sich vollständig an dem Magnetring 70 vorbeibewegen kann, bevor er den unteren Anschlag erreicht. Die Magnetorientierung des Magnetrings 70 und des unteren Rings 30 des Läufers ist so gewählt, dass zum Beispiel beide Ringe magnetische N-Pole sind, die aufeinander zu gerichtet sind. Es versteht sich, dass eine derartige Brems- und Halteeinrichtung für den Läufer 16 auch an der oberen Endstellung vorgesehen werden kann und auch in der Ausführungsform nach Fig. 1 einsetzbar ist.

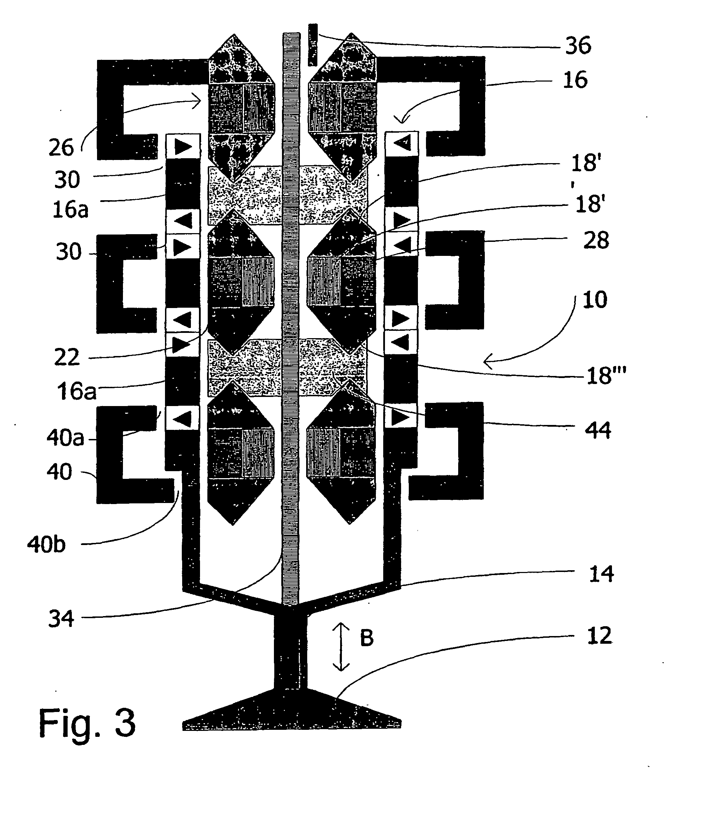

In der Fig. 3 ist eine weitere Ausführungsform eines erfindungsgemäßen Gaswechselventilantriebes für einen ventilgesteuerten Verbrennungsmotor schematisch im Längsschnitt veranschaulicht.

Der Ständer 18 hat bei dieser Ausführungsform als Kern einen hohlzylindrischen Bandwickel 18' aus einem weichmagnetischem Blechband, vorzugsweise aus Eisen-Kobalt-Blech, dessen Fläche parallel zur Bewegungsachse B des Läufers 16 orientiert ist. An den beiden Stirnseiten des Bandwickels 18' ist jeweils ein weichmagnetischer Formkörper 18", 18''' aus gesintertem Eisen-Metallpulver angeordnet, welche den Bandwickel 18' in radialer Erstreckung überragen. Die Formkörper 18", 18"' des Ständer 18 bilden an ihrem Umfang dem Läufer 16 zugewandte Zähne 22 mit einer geschlossenen Mantelfläche. Im vorliegenden Beispiel mit in der Draufsicht kreisrunden Formkörpern 18", 18"' haben die einzelnen Zähne 22 eine kreiszylindrische Mantelfläche. Es ist jedoch auch möglich, ovale Formkörper 18", 18''' oder Formkörper 18", 18"' mit polygonaler Gestalt zum Aufbau des Ständers 18 zu verwenden.

Die hohlzylindrischen Bandwickel 18' und die beiden in der Draufsicht kreisrunden Formkörper 18", 18"' bilden eine zur Außenseite hin offene Ständerspulenkammer 26, in der eine zur Mittellängsachse des Ständers 18 konzentrische, als Kupferbandspule ausgeführte Ständer-Wicklung 28 angeordnet ist.

In der Mitte hat der Ständer 18 eine Ausnehmung, in der ein Stab 34 mit einem an seiner Umfangsfläche eingeätzten Zahnprofil, das mit einer Hall-Sonde 36 abgetastet wird. Das untere Ende (in der Fig.) des Stabes 34 ist mit dem Ventilglied 12 bzw. der Stange 14 starr gekoppelt, so dass die Hall-Sonde 36 eine Bewegung des Stabes 34 in Bewegungsrichtung B erfassen kann.

In der in Fig. 3 gezeigten Anordnung ist der Läufer 16 ein Hohlzylinder, der Ringe 30 aus dauermagnetischem Material (zum Beispiel Samarium-Kobalt) aufweist. Die einzelnen dauermagnetischen Ringe 30 sind konzentrisch übereinander angeordnet, wobei die magnetische Orientierung der dauermagnetischen Ringe 30 (angedeutet durch die zur Ständermitte bzw. von ihr weg gerichteten Pfeile in jedem Ring) so gestaltet ist, dass in einer vorbestimmten Stellung des Läufers 16 zwei Zähne 22 eines Ständers 18, jeweils mit einem Ring 30 mit entgegengesetzter magnetischer Orientierung fluchten. Dabei kann insbesondere in der gezeigten Ausführungsform mit drei oder mehr übereinander angeordneten Ständerspulen ein Magnetring 30 mit einem Zahn eines ersten Ständers (zum Beispiel des mittleren) fluchten, während der zweite Magnetring 30 mit einem Zahn eines zweiten Ständers (zum Beispiel des unteren) fluchtet. Es ist jedoch auch möglich, dass die beiden Magnetringe 30 mit den beiden Zähnen eines Ständers fluchten.

Der Läufer 16 ist aus Dauermagnet-Ringen aufgebaut, die aufeinander gestapelt und miteinander fest verbunden sind.

Als magnetischer Rückschluss ist ein im Querschnitt rechteckiges magnetisch leitendes Rohr 40 vorgesehen, das in zwei einander gegenüberliegenden Wandungen Ausnehmungen 40a, 40b aufweist, durch die der Läufer 16 und der Ständer ragen. Die Wandungen des Rohrs 32 haben eine solche Materialdicke und einen solchen Abstand zueinander, dass sie mit zwei Zähnen 22 eines Ständers 18 fluchten.

Zwei zueinander in Bewegungsrichtung B des Läufers 16 benachbarte Ständer 18 eines Gaswechselventils sind durch eine als Abstandshalter und Wirbelstromabschirmung wirkende Aluminiumschiene 44 miteinander fest verbunden.

In der in Fig. 3 gezeigten Ausführungsform sind drei Ständer 18 übereinander angeordnet. Hierbei können in der leichtesten Ausführungsform des Läufers zwei Magnetringe 30 im Abstand zueinander angeordnet sein. Vorzugsweise sind jedoch wenigstens vier Magnetringe 30 vorgesehen, wobei jeweils zwei Magnetringe 30 (also ein Magnetring-Paar) mit entgegengesetzter magnetischer Orientierung entweder direkt aneinander liegen oder lediglich einen geringen (axialen) Abstand zueinander haben. Durch die Festlegung des Abstandes der Magnetringe 30 zueinander bzw. auch des Abstandes der Magnetring-Paare 30 zueinander kann der Hubverlauf beeinflusst werden.

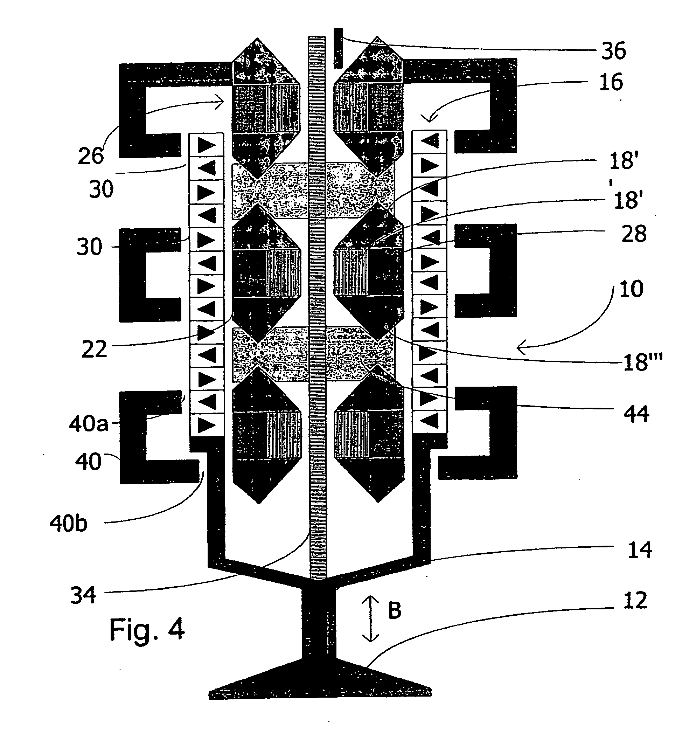

In der in Fig. 4 gezeigten Anordnung ist der Läufer 16 ein Hohlzylinder, der Ringe 30 aus dauermagnetischem Material (zum Beispiel Samarium-Kobalt) aufweist. Die einzelnen Ringe 30 sind konzentrisch übereinander angeordnet, wobei die magnetische Orientierung der Ringe (angedeutet durch die zur Ständermitte bzw. von ihr weg gerichteten Pfeile in jedem Ring) radial orientiert und so gestaltet ist, dass in einer vorbestimmten Stellung des Läufers 16 zwei Zähne 22 eines Ständers 18, jeweils mit einem Ring 30 mit entgegengesetzter magnetischer Orientierung fluchten. Dabei kann insbesondere in der gezeigten Ausführungsform nach Fig. 1 mit drei oder mehr übereinander angeordneten Ständerspulen ein Magnetring mit einem Zahn eines ersten Ständers (zum Beispiel des mittleren) fluchten, während der zweite Magnetring mit einem Zahn eines zweiten Ständers (zum Beispiel des unteren) fluchtet. Es ist jedoch auch möglich, dass die beiden Magnetringe mit den beiden Zähnen eines Ständers fluchten.

Als magnetischer Rückschluss ist als Teil des Ständers ein im Querschnitt rechteckiges magnetisch leitendes Rohr 40 vorgesehen, das in zwei einander gegenüberliegenden Wandungen Ausnehmungen 42a, 42b aufweist, durch die der Läufer 16 und der Ständer ragen. Die Wandungen des Rohrs 40 haben eine solche Materialdicke und einen solchen Abstand zueinander, dass sie mit zwei Zähnen 22 eines Ständers 18 fluchten.

Zwei zueinander benachbarte Ständer 18 eines Gaswechselventils sind durch eine als Abstandshalter und Wirbelstromabschirmung wirkende Aluminiumschiene 44 miteinander fest verbunden.

In der in Fig. 4 gezeigten Ausführungsform sind drei Ständer übereinander angeordnet. Hierbei können in der leichtesten Ausführungsform des Läufers zwei Magnetringe im Abstand zueinander angeordnet sein. Vorzugsweise sind jedoch wenigstens vier Magnetringe vorgesehen, wobei jeweils zwei Magnetringe (also ein Magnetring-Paar) mit entgegengesetzter magnetischer Orientierung entweder direkt aneinander liegen oder lediglich einen geringen (axialen) Abstand zueinander haben. Durch die Festlegung des Abstandes der Magnetringe zueinander bzw. auch des Abstandes der Magnetring-Paare zueinander kann der Hubverlauf beeinflusst werden. Dabei ist zwischen zwei Ringen 30 entgegengesetzter magnetischer Orientierung ein magnetisch nicht wirksamer Hohlzylinder, zum Beispiel aus kohlefaserverstärktem Kunststoff angeordnet, so dass insgesamt weniger Magnetringe als Ständerzähne vorhanden sind. Dies hat den Vorteil einer Gewichtseinsparung, erfordert aber eine elektrische Ansteuerung mit mehr Leistung.

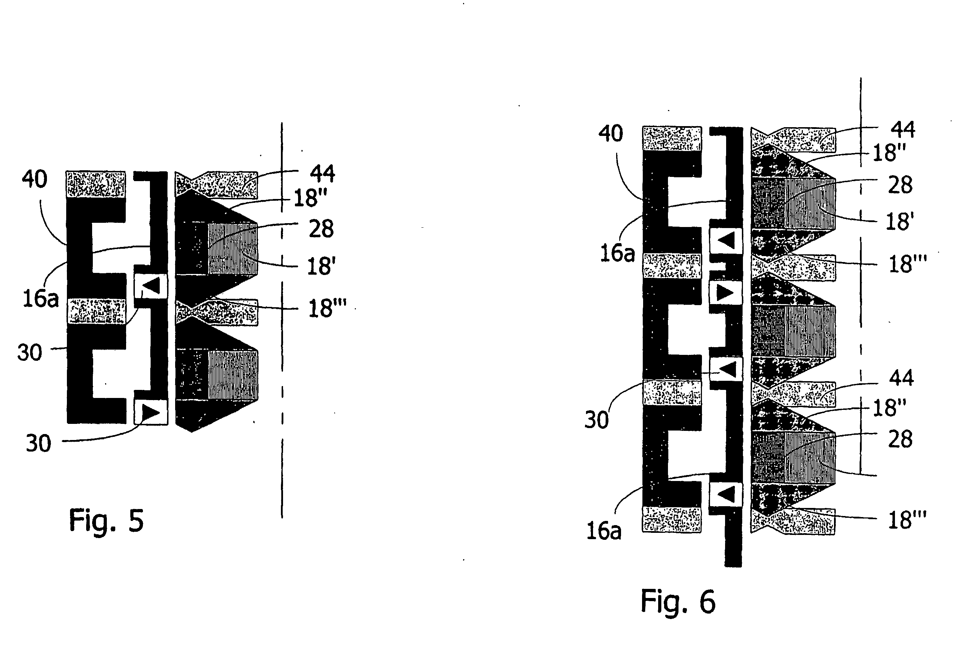

In der in Fig. 5 gezeigten Ausführungsform sind die Ständer im Prinzip unverändert, allerdings ist der axiale Abstand zwischen den Rohren 40 verringert, indem der Abstandshalter 44 eine geringere Höhe aufweist. Weiterhin ist die Anzahl der Magnetringe 30 gegenüber der Ausführungsform von Fig. 1 erheblich verringert, was eine deutlich verringerte bewegte Masse bedeutet. Hierbei ist zu erwähnen, dass der lediglich eine Magnetring pro Magnetspule bzw. Ständerpolpaar die Minimalzahl darstellt. Bei dieser Anordnung ist die Richtung des Magnetflusses nicht mehr relevant, solange der Magnetfluss in radialer Richtung orientiert ist.

Eine weitere Ausführungsform ist in Fig. 6 gezeigt, bei der die Abstandshalter 16a zwischen den Magnetringen 30 so dimensioniert sind, dass der mittleren Spule zwei Magnetringe 30 zugeordnet sind, während der oberen und der unteren Spule jeweils nur ein Magnetring 30 zugeordnet ist.

Es versteht sich, dass einzelne oder mehrere Aspekte einer Ausführungsform auch mit anderen Aspekten oder Details einer anderen Ausführungsform zu kombinieren sind.

Die erläuterten Ausführungsformen eignen sich besonders, den geforderten Hub von etwa 20 mm mit der erforderlichen Dynamik in dem zur Verfügung stehenden relativ schmalen Bauraum zu realisieren.

## Patentansprüche

1. Gaswechselventilantrieb für einen ventilgesteuerten Verbrennungsmotor, mit
- einem mit einem Ventilglied (12) zu koppelnden hohlzylindrischen Läufer (16) und einem Ständer (18), wobei
- der Läufer (16) konzentrisch übereinander angeordnete, dauermagnetische Ringe (30) aufweist,
- der Ständer (18) zumindest teilweise aus einem weichmagnetischen Material aufgebaut ist und zumindest einen dem Läufer (16) zugewandten Zahn (22) aufweist,
- der Ständer (18) einen radial innen liegenden magnetisch leitenden Bereich (50) und einen radial außen liegenden magnetisch leitenden Bereich (52) aufweist, wobei die Ringe (30) des Läufers (16) zwischen dem innen liegenden Bereich (50) und dem außen liegenden Bereich (52) des Ständers (18) angeordnet sind, und
- zumindest eine Ständerspule (28) an dem innen liegenden Bereich (50) des Ständers (18) und/oder in dessen außen liegendem Bereich (52) angeordnet ist.

2. Gaswechselventilantrieb nach Anspruch 1, wobei benachbarte dauermagnetische Ringe (30) des Läufers (16) radial gerichtete, abwechselnde Magnetorientierungen aufweisen.

3. Gaswechselventilantrieb nach Anspruch 1, wobei jeweils zwei benachbarte Ringe (30) des Läufers (16) durch magnetisch nicht wirksame Abstandshalter in einem vorbestimmten Abstand zueinander gehalten sind.

4. Gaswechselventilantrieb nach Anspruch 1, wobei an dem radial innen liegenden magnetisch leitenden Bereich (50) des Ständers (18) und/oder dem radial außen liegenden magnetisch leitenden Bereich (52) des Ständers (18) in Bewegungsrichtung des Läufers (16) wenigstens ein Zahn (22) ausgebildet ist, dessen Abmessung in der Bewegungsrichtung des Läufers (16) im wesentlichen gleich der Abmessung eines dauermagnetischen Rings (30) in der Bewegungsrichtung des Läufers (16) ist, so dass in einer vorbestimmten Stellung des Läufers (16) der wenigstens eine Zahn (22) des Ständers (18) mit einem dauermagnetischen Ring (30) fluchtet.

5. Gaswechselventilantrieb nach Anspruch 1, wobei durch die Abmessungen der dauermagnetischen Ringe (30) in der Bewegungsrichtung des Läufers (16) und den wenigstens einen Zahn (22) des Ständers (18) eine Polteilung definiert ist, die kleiner ist als die Abmessung der Ständerspule (28) in deren Längsrichtung.

6. Gaswechselventilantrieb nach Anspruch 1, bei dem der innen liegende Bereich (50) des Ständers (18) zusätzlich oder an Stelle des außen liegenden Bereiches (52) des Ständers (18) eine Ständerspule (28) aufweist.

7. Gaswechselventilantrieb nach Anspruch 4, wobei der Spulenbereich (18b) in Bewegungsrichtung des Läufers (16) größer ist als der Abstand zwischen zwei benachbart angeordneten Zähnen (22) des Ständers (18).

8. Gaswechselventilantrieb nach Anspruch 1, wobei der Ständer (18) ein weichmagnetischer Formkörper, vorzugsweise aus gepresstem und/oder gesintertem Metallpulver ist.

9. Gaswechselventilantrieb nach Anspruch 9, wobei der weichmagnetische Formkörper des Ständers (18) in seinem Inneren wenigstens einen Kern (62) mit Kobalt-haltigem Eisen aufweist.

10. Gaswechselventilantrieb nach Anspruch 1, wobei die zumindest eine Ständerspule (28)
in einem quer zur Bewegungsrichtung (B) des Läufers (16) orientierten Bereich (56, 58) des im Querschnitt C-förmig gestalteten Teilabschnittes (54), oder
in einem im Wesentlichen parallel zur Bewegungsrichtung (B) des Läufers (16) orientierten Bereich (60) des im Querschnitt C-förmig gestalteten Teilabschnittes (54), oder
in einem im Wesentlichen parallel zur Bewegungsrichtung (B) des Läufers (16) orientierten innen liegenden Bereich (50) des Ständers (18) diesen konzentrisch umgebend angeordnet ist.

11. Gaswechselventilantrieb nach Anspruch 1 oder 10, wobei entlang des Umfangs des Ständers (18) wenigstens zwei im Querschnitt C-förmig gestaltete Teilabschnitte (54) mit jeweils wenigstens einer Ständerspule (28) verteilt angeordnet sind.

12. Gaswechselventilantrieb nach Anspruch 1, wobei dem Läufer (16) ein Wegsensor (32, 34, 36) zur Erfassung des Hubes des Ventilgliedes (12) zugeordnet ist.

13. Gaswechselventilantrieb nach Anspruch 1, wobei zum Bremsen und Halten des Läufers (16) in wenigstens einer seiner Endstellungen ein die Ringe (30) des Läufers (16) umgebender oder von diesen umgebener Magnetring (70) mit radialer Magnetorientierung im Bereich der jeweiligen Endstellung des Läufers (16) so angeordnet ist, dass vor dem Erreichen der Endstellung ein Ring (30) des Läufers (16) mit gleicher Magnetorientierung wie der Magnetring (70) diesen passiert um anschließend die Endstellung einzunehmen.

14. Gaswechselventilantrieb insbesondere nach Anspruch 1, wobei ein magnetischer Rückschlusskörper durch ein vorzugsweise im Querschnitt rechteckiges magnetisch leitendes Rohr (40) gebildet ist, bei dem in zwei einander gegenüberliegenden Wandungen Ausnehmungen (40a, 40b) vorgesehen sind, durch die der Läufer und der Ständer ragen, wobei die Wandungen eine solche Materialdicke und einen solchen Abstand zueinander haben, dass sie mit zwei Zähnen (22) eines Ständers (18) fluchten.

15. Gaswechselventil nach Anspruch 15, wobei der Ständer (18) einen Bandwickel (18') aus weichmagnetischem Blechband aufweist.

16. Gaswechselventil nach Anspruch 1, wobei die Zähne (22) bzw. die ihnen gegenüber befindlichen Dauermagnete (20) im Verhältnis zur der axialen Erstreckung der Wicklungskammer (26) so bemessen sind, dass auf einem Abschnitt des Läufers (18) zumindest zwei weitere Dauermagnete (20) Platz finden, wobei die axiale Erstreckung des Abschnitts des Läufers (18) der axialen Erstreckung der Zähne (22) und der Wicklungskammer (26) entspricht.

17. Interner Verbrennungsmotor mit wenigstens einem Verbrennungszylinder, mit wenigstens einem Gaswechselventil mit den Merkmalen eines oder mehrerer der vorstehenden Ansprüche.

## Claims

1. A gas exchange valve drive for a valve-controlled combustion engine with
- a hollow cylindrical rotor (16) to be coupled with a valve member (12) and a stator (18), wherein
- the rotor (16) comprises permanent-magnetic rings (30) concentrically arranged one above the other,
- the stator (18) is at least partially constructed of a soft magnetic material and comprises at least one tooth (22) facing the rotor (16),
- the stator (18) comprises a radially inner magnetically conductive area (50) and a radially outer magnetically conductive area (52), wherein the rings (30) of the rotor (16) are disposed between the inner area (50) and the outer area (52) of the stator (18), and
- at least one stator coil (28) is arranged on the inner area (50) of the stator (18) and/or in its outer area (52).

2. The gas exchange valve drive according to Claim 1, wherein neighbouring permanent-magnetic rings (30) of the rotor (16) comprise radially oriented alternating magnetic orientations.

3. The gas exchange valve drive according to Claim 1, wherein two neighbouring rings (30) each of the rotor (16) are maintained in a predetermined distance from each other by means of magnetically not effective spacers.

4. The gas exchange valve drive according to Claim 1, wherein
on the radially inner magnetically conductive area (50) of the stator (18) and/or on the radially outer magnetically conductive area (52) of the stator (18) at least one tooth (22) is formed in the direction of movement of the rotor (16), whose dimension in the direction of movement of the rotor (16) is essentially the same as the dimension of a permanent-magnetic ring (30) in the direction of movement of the rotor (16), so that in a predetermined position of the rotor (16) the at least one tooth (22) of the stator (18) is in alignment with one permanent-magnetic ring (30).

5. The gas exchange valve drive according to Claim 1, wherein
a pole pitch is defined by the dimensions of the permanent-magnetic rings (30) in the direction of movement of the rotor (16) and the at least one tooth (22) of the stator (18), which is smaller than the dimensions of the stator coil (28) in its longitudinal direction.

6. The gas exchange valve drive according to Claim 1, wherein the inner area (50) of the stator (18) comprises a stator coil (28) in addition to or instead of the outer area (52) of the stator (18).

7. The gas exchange valve drive according to Claim 4, wherein the coil area (18b) in the direction of movement of the stator (16) is greater than the distance between two neighbouring teeth (22) of the stator (18).

8. The gas exchange valve drive according to Claim 1, wherein the stator (18) is a soft magnetic form body, preferably from pressed and/or sintered metal powder.

9. The gas exchange valve drive according to Claim 9, wherein the soft magnetic form body of the stator (18) comprises at least one core (62) with cobalt-containing iron in its interior space.

10. The gas exchange valve drive according to Claim 1, wherein the at least one stator coil (28) is arranged
in an area (56, 58) oriented transversely to the direction of movement (B) of the rotor (16) of the partial section (54) with C-shaped cross-section, or
in an area (60) oriented essentially parallel to the direction of movement (B) of the rotor (16) of the partial section (54) with C-shaped cross-section, or
in an inner area (50) of the stator (18) oriented essentially parallel to the direction of movement (B) of the rotor (16) and concentrically surrounding same.

11. The gas exchange valve drive according to Claim 1 or 10, wherein at least two partial sections (54) with C-shaped cross-section and comprising at least one stator coil (28) each are arranged distributed along the circumference of the stator (18).

12. The gas exchange valve drive according to Claim 1, wherein the rotor (16) is assigned a displacement transducer (32, 34, 36) for detecting the stroke of the valve member (12).

13. The gas exchange valve drive according to Claim 1, wherein for braking and holding the rotor (16) in at least one of its end positions a magnet ring (70) with a radial magnetic orientation, which surrounds the rings (30) of the rotor (16) or is surrounded by them, is arranged in the area of the respective end position of the rotor (16) in such a manner that one ring (30) of the rotor (16) with the same magnetic orientation as the magnet ring (70) passes same prior to reaching the end position, in order to subsequently assume the end position.

14. The gas exchange valve drive, in particular according to claim 1, wherein a magnetic yoke body is formed by a magnetically conductive tube (40), preferably with a rectangular cross-section, in which recesses (40a, 40b) are provided in two opposite walls, through which the rotor and the stator protrude, with the walls having such a material thickness and such a distance from one another that they are in alignment with two teeth (22) of one stator (18).

15. The gas exchange valve according to Claim 15, wherein the stator (18) comprises a strip-wound coil (18') from a soft magnetic sheet metal strip.

16. The gas exchange valve according to Claim 1, wherein the teeth (22) or the oppositely located permanent magnets (20), respectively, are dimensioned relative to the axial extension of the winding chamber (26) in such a manner that there is space for at least two further permanent magnets (20) on a section of the rotor (18), with the axial extension of the section of the rotor (18) corresponding to the axial extension of the teeth (22) and the winding chamber (26).

17. An internal combustion engine with at least one combustion cylinder, comprising at least one gas exchange valve with the characteristics of one or several of the previous claims.

## Revendications

1. Mécanisme d'entraînement pour soupape d'échange de gaz destinée à un moteur à combustion interne commandé par soupapes, comprenant : un induit cylindrique creux (16) destiné à être accouplé à un opercule de soupape (12), et un stator (18), dans lesquels
-- l'induit (16) comprend des bagues magnétiques permanentes (30) concentriques agencées les unes au-dessus des autres,
-- le stator (18) est réalisé au moins partiellement en un matériau magnétique doux et comporte au moins une dent (22) tournée vers l'induit (16),
-- le stator (18) comporte une région magnétiquement conductrice (50) située radialement à l'intérieur et une région magnétiquement conductrice (52) située radialement à l'extérieur, les bagues (30) de l'induit (16) étant agencées entre la région intérieure (50) et la région extérieure (52) du stator ( 18), et
-- au moins une bobine de stator (28) est agencée sur la région intérieure (50) du stator (18) et/ou dans sa région extérieure (52).

2. Mécanisme d'entraînement pour soupape d'échange de gaz selon la revendication 1, dans lequel des bagues magnétiques permanentes (30) voisines, de l'induit (16), comportent des orientations magnétiques orientées radialement et en alternance.

3. Mécanisme d'entraînement pour soupape d'échange de gaz selon la revendication 1, dans lequel deux bagues respectives voisines (30) de l'induit (16) sont tenues à une distance prédéterminée l'une de l'autre par des éléments d'écartement magnétiquement sans effet.

4. Mécanisme d'entraînement pour soupape d'échange de gaz selon la revendication 1, dans lequel au moins une dent (22) est réalisée sur la région magnétiquement conductrice (50), située radialement à l'intérieur, du stator (18) et/ou sur la région magnétiquement conductrice (52), située radialement à l'extérieur, du stator (18) dans la direction de déplacement de l'induit (16), dent dont la dimension dans la direction de déplacement de l'induit (16) est essentiellement égale à la dimension d'une bague magnétique permanente (30) dans la direction de déplacement de l'induit (16), de sorte que dans une position prédéterminée de l'induit (16), ladite au moins une dent (22) du stator (18) est alignée avec une bague magnétique permanente (30).

5. Mécanisme d'entraînement pour soupape d'échange de gaz selon la revendication 1, dans lequel les dimensions des bagues magnétiques permanentes (30) dans la direction de déplacement de l'induit (16) et de ladite au moins une dent (22) du stator (18) définissent une subdivision polaire qui est plus petite que la dimension de la bobine de stator (28) dans sa direction longitudinale.

6. Mécanisme d'entraînement pour soupape d'échange de gaz selon la revendication 1, dans lequel la région intérieure (50) du stator (18) comprend une bobine de stator (28) en supplément ou à la place de la région extérieure (52) du stator (18).

7. Mécanisme d'entraînement pour soupape d'échange de gaz selon la revendication 4, dans lequel la région de bobine (18b) en direction de déplacement de l'induit (16) est plus grande que la distance entre deux dents voisines (22) du stator (18).

8. Mécanisme d'entraînement pour soupape d'échange de gaz selon la revendication 1, dans lequel le stator (18) est un corps conformé magnétique doux, de préférence à partir d'une poudre métallique pressée et/ou frittée.

9. Mécanisme d'entraînement pour soupape d'échange de gaz selon la revendication 8, dans lequel le corps conformé magnétique doux du stator (18) comprend à l'intérieur au moins un noyau (62) avec du fer contenant du cobalt.

10. Mécanisme d'entraînement pour soupape d'échange de gaz selon la revendication 1, dans lequel ladite au moins une bobine de stator (28) est agencée
dans une région (56, 58), du tronçon partiel (54) réalisé avec une section en forme de C, orientée transversalement à la direction de déplacement (B) de l'induit (16), ou
dans une région (60), du tronçon partiel (54) réalisé avec une section en forme de C, orientée essentiellement parallèlement à la direction de déplacement (B) de l'induit (16), ou
dans une région (50) intérieure du stator (18) orientée essentiellement parallèlement à la direction de déplacement (B) de l'induit (16) de manière à entourer le stator (18) de façon concentrique.

11. Mécanisme d'entraînement pour soupape d'échange de gaz selon l'une ou l'autre des revendications 1 et 10, dans lequel au moins deux tronçons partiels (54), réalisés avec une section en forme de C et comportant respectivement au moins une bobine de stator (28), sont agencés de façon répartie le long de la périphérie du stator (18).

12. Mécanisme d'entraînement pour soupape d'échange de gaz selon la revendication 1, dans lequel un détecteur de course (32, 34, 36) destiné à détecter la course de l'opercule de soupape (12) est associé à l'induit (16).

13. Mécanisme d'entraînement pour soupape d'échange de gaz selon la revendication 1, dans lequel, pour freiner et maintenir l'induit (16) dans l'une au moins de ses positions finales, une bague magnétique (70) qui entoure les bagues (30) de l'induit (16) ou qui est entourée par celles-ci et qui présente une orientation magnétique radiale dans la zone de la position finale respective de l'induit (16) est agencée de telle manière qu'avant d'atteindre la position finale, une bague (30) de l'induit (16) présentant la même orientation magnétique que la bague magnétique (70) passe devant celle-ci pour occuper ensuite la position finale.

14. Mécanisme d'entraînement pour soupape d'échange de gaz selon la revendication 1, dans lequel un corps fermant un circuit magnétique est constitué par un tube magnétiquement conducteur (40) présentant de préférence une section rectangulaire, dans lequel des évidements (40a, 40b) sont prévus dans deux parois mutuellement opposées, à travers lesquels passent l'induit et le stator, lesdites parois ayant une telle épaisseur et présentant une telle distance l'une par rapport à l'autre qu'elles sont alignées avec deux dents (22) d'un stator (18).

15. Mécanisme d'entraînement pour soupape d'échange de gaz selon la revendication 14, dans lequel le stator (18) comprend un bobinage (18') réalisé à partir d'une bande en tôle d'un matériau magnétique doux.

16. Mécanisme d'entraînement pour soupape d'échange de gaz selon la revendication 1, dans lequel les dents (22), ou respectivement les aimants permanents (20) qui se trouvent à l'opposé de celles-ci, sont dimensionné(e)s, en relation à l'extension axiale de la chambre (26) du bobinage, de telle manière que sur un tronçon de l'induit (18) trouvent place au moins deux autres aimants permanents (20), et dans lequel l'extension axiale du tronçon de l'induit (18) correspond à l'extension axiale des dents (22) et de la chambre (26) du bobinage.

17. Moteur à combustion interne comprenant au moins un cylindre de combustion, et comprenant au moins une soupape d'échange de gaz avec les caractéristiques d'une ou de plusieurs des revendications précédentes.
